Europäisches Patentamt

European Patent Office

Office européen des brevets

(19)

(11) Numéro de publication: **0 237 688**
**B1**

(12) **FASCICULE DE BREVET EUROPEEN**

(45) Date de publication du fascicule du brevet:
06.12.89

(51) Int. Cl.⁴: **F16L 3/10**

(21) Numéro de dépôt: **86402791.7**

(22) Date de dépôt: **12.12.86**

(54) **Collier support de tuyau.**

(30) Priorité: **13.12.85 FR 8518650**

(43) Date de publication de la demande:
**23.09.87 Bulletin 87/39**

(45) Mention de la délivrance du brevet:
**06.12.89 Bulletin 89/49**

(84) Etats contractants désignés:
**BE DE GB IT LU NL**

(56) Documents cités:
**DE-A- 1 960 111**
**FR-A- 2 500 571**
**GB-A- 785 300**
**GB-A- 1 261 202**
**GB-A- 1 284 144**
**US-A- 2 365 985**
**US-A- 3 262 662**
**US-A- 4 413 799**

(73) Titulaire: **Weiss, Jacques, 48, rue du 19 Janvier,**
**F-92380 Garches(FR)**

(72) Inventeur: **Weiss, Jacques, 48, rue du 19 Janvier,**
**F-92380 Garches(FR)**

(74) Mandataire: **Chameroy, Claude et al, c/o Cabinet**
**Malemont 42, avenue du Président Wilson,**
**F-75116 Paris(FR)**

ACTORUM AG

## Description

L'invention est relative aux colliers servant à supporter les tuyaux et les canalisations courant le long des parois verticales et horizontales des bâtiments. Elle concerne plus particulièrement les colliers du type comprenant deux éléments demi-circulaires, dont un élément fixe présentant dans sa partie intermédiaire un moyen de fixation à la paroi (tel que vis, patte de scellement, étrier traversé par un boulon) et un élément amovible s'assemblant sur l'élément fixe pour refermer le collier et serrer le tuyau. Des colliers de ce genre sont illustrés par exemple dans le document FR-A-2 500 571. Cette conception de collier, qui est simple et peu coûteuse, convient bien pour supporter les tuyaux en position horizontale, sous un plafond par exemple, ou encore pour maintenir des tuyaux en position verticale le long d'un mur. Elle convient moins bien pour supporter des tuyaux en position horizontale le long d'un mur, car dans ce das le poids du tuyau s'exerce en porte à faux et il tend à déformer le collier. Aussi dans ce dernier cas utilise-t-on généralement des supports spéciaux comprenant un élément fixe en forme de crochet dimensionné pour soutenir le poids du tuyau; cette dernière conception est techniquement plus satisfaisante mais elle est plus coûteuse que celle du collier précité. De plus, l'installateur est conduit à avoir toujours en stock et à sa disposition sur le chantier ces deux types de colliers pour réaliser toutes les installations demandées.

L'invention a pour but de permettre d'utiliser dans tous les cas le même type de collier en l'adaptant facilement selon les positions des tuyaux à installer. Elle concerne dans ce but un collier support de tuyaux ou de canalisations comprenant deux demi-colliers demi-circulaires dont un fixe présentant dans sa partie intermédiaire un moyen de fixation à la paroi et un demi-collier amovible s'assemblant sur le premier, caractérisé en ce qu'un élément renforçant en forme générale d'équerre comprenant deux branches est associé à la face extérieure du demi-collier fixe par lesdites branches et en ce que l'une desdites branches est associée à ladite face extérieure du demi-collier fixe à proximité du moyen de fixation.

De préférence, cet élément renforçant est amovible et on ne l'utilise que lorsque le collier est fixé à une paroi verticale pour supporter un tuyau en position horizontale.

Deux exemples de réalistion sont décrits ci-après en référence au dessin ci-joint dans lequel:

la fig. 1 est une vue en élévation coupe du collier fixé à une paroi verticale pour supporter un tuyau en position horizontale.
la fig. 2 est une vue partielle de profil suivant A et la fig. 3 une vue partielle de profil suivant B.
la fig. 4 montre le même collier fixé à un mur vertical, sans l'élément renforçant.
la fig. 5 montre en élévation coupe partielle une autre réalisation du collier.

Dans les deux exemples illustrés le collier est costitué de deux demi-colliers demi-circulaires formés à partir d'une bande de métal découpée et pliée. Le demi-collier fixe 1 présente en sa partie intermédiare un étrier de fixation 3 percé d'une lumière 4 pour le passage du boulon de fixation 5. Sa fixation est assurée par un écrou balladeur serti librement sur une plaquette s'appliquant sur la face interne de l'étrier. Cette plaquette est retenue par des pattes pliées de l'étrier, la laissant libre de se déplacer par rapport à l'étrier, cela afin de permettre le réglage de la position du collier au moment de sa fixation à la paroi.

Une extrémité du demi-collier 1 présente une languette 6 découpée et repliée vers l'extérieur pour l'accrochage du demi-collier amovible 2. Son autre extrémité forme une patte 7 repliée radialement et portant une vis de serrage 8. Le demi-collier 2 présente à une extrémité un ou plusieurs trous 9 pour coopérer avec la languette 6 et à l'autre extrémité une languette rétrécie 10 coudée radialement en 11 et prolongée par une partie 12 formant guide pour introduire cette languette dans un trou 13 de la patte 7 afin d'amener sa partie 11 sous l'extrémité de la vis de serrage 8. Avec la pluralité de trous d'accrochage 9 et avec la course de serrage de la vis 8, le même collier peut être utilisé pour des tuyaux de diamètres quelque peu différents.

On remarque que les moyens d'assemblages 6-9 et 8-10 des demi-colliers sont disposés suivant un diamètre incliné d'environ 45° par rapport au plan diamétral passant par l'étrier de fixation 3. Cela permet de ne pas avoir de saillie de part et d'autre du collier et de pouvoir ainsi installer des tuyaux parallèlement et pratiquement l'un contre l'autre.

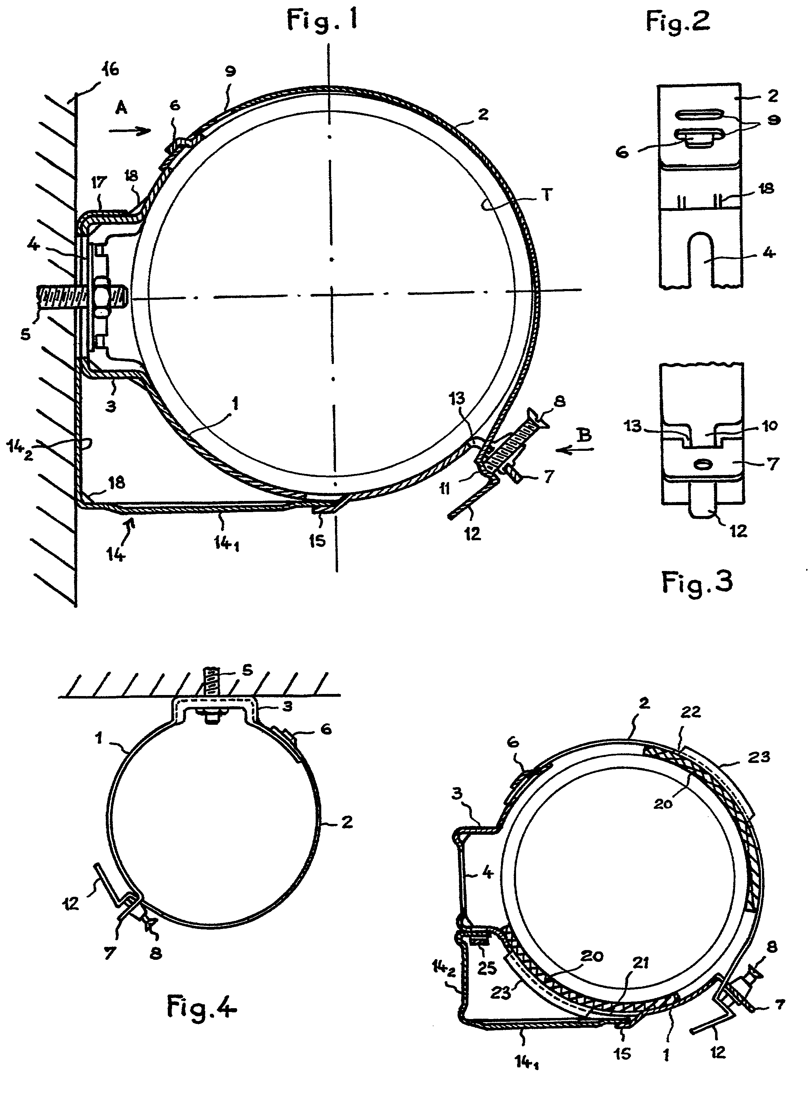

Dans le cas de la fig. 1, l'élément renforçant 14 est formé avec une bande de métal pliée en forme d'équerre, avec une branche horizontale $14_1$ qui soutient le côté inférieur du demi-collier fixe 1. A cette fin, celui-ci présente une languette découpée 15 repliée vers l'extérieur et formant un appui sous lequel vient se caler l'extrémité de la branche $14_1$. Cette branche fait ainsi office de jambe de force pour supporter la réaction du poids du tuyau T monté dans le collier. L'autre branche verticale $14_2$ de l'élément renforçant s'appuie sur le mur vertical 16 et elle se prolonge de façon à être serrée entre l'étrier 3 et le mur. Son extrémité est coudée en 17 pour s'appuyer sur le côté supérieur de l'étrier 3. Un tampon en caoutchouc peut être interposé entre l'étrier et l'élément renforçant $14_2$ pour assurer une isolation phonique et anti-vibratoire du collier.

Ce collier peut être utilisé aussi sans l'élément renforçant 14 pour supporter le tuyau en position horizontale sous un plafond, ou en position verticale le long d'un mur ( fig. 4), c'est-à-dire lorsque la position du tuyau installé n'exerce pas d'effort latéral sur le collier.

L'élément renforçant 14 forme un pièce de réalisation simple et peu coûteuse comparativement à un support conçu spécialement pour installer un tuyau en position horizontale. Cet élément peut être exécuté de diverses façons mais la plus avantageuse paraît être la technique de la bande découpée et au besoin emboutie pour former des nervures ou des goussets tels que 18 pour le raidissement de la pièce,notamment aux endroits des angles rentrants des parties pliées.

La fig. 5 montre une autre forme de réalisation de l'élément renforçant 14 dans laquelle la branche verticale $14_2$ de cet élément est repliée pour venir se caler sous l'étrier 3 du demi-collier fixe 1. L'extrémité de cette branche forme un patte rétrécie qui est engagée dans une ouverture 25 découpée dans la face inférieure de l'étrier 3 afin de solidariser l'élément 14 avec le demi-collier 1. La face extérieure de l'étrier 3 et celle de la branche $14_2$ peuvent être concaves dans leur partie centrale pour s'affranchir des défauts de planéité de la paroi 16.

La fig. 5 montre aussi l'utilisation du collier avec des cales d'épaisseurs 20 à fixation rapide permettant d'utiliser un même diamètre de collier pour des tuyaux de diamètres différents. Les demi-colliers 1-2 présentent chacun une rainure médiane 21-22 permettant d'adapter les cales semi-circulaires 20. Celles-ci présentent une nervure dorsale 23 fendue longitudinalement pour leur donner de l'élasticité, ce qui permet de les monter sur le collier par encliquetage de leur nervure 23 dans les rainures correspondantes 21-22 des demi-colliers. Ces cales 20 sont avantageusement en matériau souple pour assurer l'isolation anti-vibratoire des tuyaux.

D'autres modifications peuvent être apportées aux colliers décrits ci-dessus. On peut par exemple réaliser le demi-collier fixe 1 avec une bande de métal plus épaisse que celle du demi-collier 2 afin qu'il coopère plus efficacement avec l'élément renforçant 14 pour supporter le poids du tuyau.

## Revendications

1. Collier support de tuyaux comprenant deux demi-colliers demi-circulaire dont un fixe présentant dans sa partie intermédiare un moyen de fixation à la paroi et un demi-collier amovible s'assemblant sur le premier, caractérisé en ce qu'un élément renforçant (14) en forme générale d'équerre comprenant deux branches ($14_1$, $14_2$) est associé à la face extérieure du demi-collier fixe (1) par lesdites branches, et en ce que l'une desdites branches est associée à ladite face extérieure du demi-collier fixe (1) à proximité du moyen de fixation.

2. Collier selon la revendication 1, dans lequel l'élément renforçant (14) est amovible par rapport au demi-collier fixe (1).

3. Collier selon la revendication 1, dans lequel, à l'état monté du collier, l'élément renforçant présente une branche horizontale ($14_1$) dont l'extrémité vient se caler sous un appui (15) sur le côté inférieur du demi-collier fixe.

4. Collier selon une des revendications 1 à 3, dans lequel, à l'état monté du collier, l'élément renforçant présente une branche verticale ($14_2$) prenant appui sur le moyen de fixation (3) du demi-collier fixe.

5. Collier selon la revendication 4, dans lequel la branche verticale ($14_2$) de l'élément renforçant est serrée entre la paroi et la face de fixation du collier.

6. Collier selon la revendication 4, dans lequel la branche verticale de l'élément renforçant est repliée pour s'appuyer sous l'étrier de fixation du demi-collier fixe (1).

7. Collier suivant l'une des revendications précédentes, caractérisé en ce que les moyens d'assemblage (6; 9; 8; 11) des demi-colliers sont décalés angulairement d'environ 45° par rapport au plan axial passant par le moyen de fixation (3; 4) du demi-collier fixe.

8. Collier suivant l'une des revendication précédentes, caractérisé en ce que chaque demi-collier à sa face intérieure présente sur sa portée demi-circulaire une cale d'épaisseur (20) interchageable.

9. Collier suivant la revendication 8 dans lequel les cales d'épaisseur (20) présentent une nervure dorsale s'encliquetant dans une rainure correspondante de chaque demi-collier.

## Patentansprüche

1. Rohrhalteschelle bestehend aus zwei halbrunden Halbschellen, von denen eine feststehende Halbschelle in ihrem zwischenliegenden Teil ein Wandbefestigungsmittel aufweist und eine lösbare Halbschelle mit der ersten verbunden ist, dadurch gekennzeichnet, dass ein etwa winkelförmiges versteifendes Element (14) mit zwei Schenkel ($14_1$, $14_2$) der Aussenseite der feststehenden Halbschelle (1) zugeordnet ist, wobei ein Schenkel der Aussenseite der feststehenden Halbschelle (1) im Bereich des Befestigungsmittels zugeordnet ist.

2. Rohrhalteschelle nach Anspruch 1, worin das versteifende Element (14) in bezug auf die feststehende Halbschelle (1) abnehmbar ist.

3. Rohrhalteschelle nach Anspruch 1, worin, im montierten Zustand der Schelle, das versteifende Element einen waagerechten Schenkel ($14_1$) aufweist, dessen Ende unter einem Stütz (15) auf der Unterseite der feststehenden Halbschelle geklemmt ist.

4. Rohrhalteschelle nach einem der Ansprüche 1 bis 3, worin, im montierten Zustand der Schelle, das versteifende Element einen lotrechten Schenkel ($14_2$) aufweist, welcher sich auf das Befestigungsmittel (3) der feststehenden Halbschelle abstutzt.

5. Rohrhalteschelle nach Anspruch 4, worin der lotrechte Schenkel ($14_2$) des versteifenden Elements zwischen der Wand und der Befestigungsseite der Schelle eingespannt ist.

6. Rohrhalteschelle nach Anspruch 4, worin der lotrechte Schenkel des versteifenden Elements abgekantet ist, um sich unter dem Befestigungsbügel der feststehenden Halbschelle (1) abzustutzen.

7. Rohrhalteschelle nach einem der vorhergehenden Ansprüche, dadurch gekennzeichnet, dass die Montagemittel (6, 9; 8, 11) der Halbschellen in einem Winkel von ungefähr 45° in Bezug auf die Axialebene versetzt sind, die durch das Befestigungsmittel (3, 5) der feststehenden Halbschelle verläuft.

8. Rohrhalteschelle nach einem der vorhergehenden Ansprüche, dadurch gekennzeichnet, dass jede Halbschelle an ihrer Innenseite an ihrer halbkreisförmigen Bogenöffnung einen auswechselbaren Belagskeil (20) aufweist.

9. Rohrhalteschelle nach Anspruch 8, worin die Belagskeile (20) eine rückseitige Rippe aufweisen, die sich in eine entsprechende Nute jeder Halbschelle einrastet.

## Claims

1. Pipe support collar, comprising two semicircular half-collars, consisting of a fixed semicircular half-collar having in its intermediate section a wall fastening device, and of a movable half-collar joining with the first half-collar, characterized in that a reinforcing element (14), having an overall square shape and comprising two branches (14₁, 14₂), is connected to the external face of the fixed half-collar (1) by the aforementioned branches, and in that one of the aforementioned branches is connected to the aforementioned external face of the fixed half-collar (1) close to the fastening device.

2. Collar as in Claim 1, in which the reinforcing element (14) is movable relative to the fixed half-collar (1).

3. Collar as in Claim 1, in which, when the collar is assembled, the reinforcing element has a horizontal branch (14) the end of which is retained under a support (15) on the lower side of the fixed half-collar.

4. Collar as in any one of Claims 1 to 3, in which, when the collar is assembled, the reinforcing element has a vertical branch (14₂) supported by the fastening device (3) of the fixed half-collar.

5. Collar as in Claim 4, in which the vertical branch (14₂) of the reinforcing element is claped between the wall and the fastening face of the collar.

6. Collar as in Claim 4, in which the vertical branch of the reinforcing element is turned back to rest under the fastening clamp of the fixed half-collar (1).

7. Collar as in any one of the preceding Claims, characterized in that the joining devices (6, 9; 8, 11) of the half-collars are offset at an angle of approximately 45° relative to the axial plane through the fastening device (3, 5) of the fixed half-collar.

8. Collar as in any one of the preceding Claims, characterized in that each half-collar has an interchangeable shim (20) on its internal face, over its semicircular span.

9. Collar as in Claim 8, in which the shims (20) have a dorsal rib which engages with a corresponding groove in each half-collar.

EP 0 237 688 B1

Fig. 1

Fig.2

Fig.3

Fig.4